# EUROPEAN PATENT SPECIFICATION

(11) **EP 1 141 061 B1**
(45) Date of publication and mention of the grant of the patent: **02.10.2002**
(21) Application number: 99962457.0
(22) Date of filing: 23.12.1999
(51) Int. Cl.: C08G 18/42, C08G 18/76, C09D 175/06

(54) **COATING COMPOSITION**
BESCHICHTUNGSZUSAMMENSETZUNG
COMPOSITION DE REVETEMENT

(30) Priority: 24.12.1998 GB 9828445
(43) Date of publication of application: 10.10.2001
(73) Proprietor: PPG Industries Ohio, Inc., Cleveland, OH 44111 (US)
(72) Inventor: FENN, David Robert, Burnham Bucki nghamshire SL1 7ND (GB); LAM, Peter, Kwok, Hing, DK-2970 H rsholm (DK)
(74) Representative: W.P. Thompson & Co.
(86) International application number: GB9904424
(87) International publication number: WO00039180

(56) References cited:
- WO-A-96/20968
- WO-A-97/30099
- DE-A- 2 439 276
- NL-A- 9 201 868

## Description

This invention relates to polyurethane coating compositions, their preparation and use.

Coatings used for the repair and refinishing of vehicles such as motorcars (known as vehicle refinish paints) are required to have very good physical properties such as hardness and resistance to water and solvents. The coating compositions are also required to have good application and appearance properties so that they are easy to apply to a substrate using spray application and result in final films having a good gloss.

One class of coating compositions commonly used for these applications comprises a hydroxyl functional polymer, such as a polyester or acrylic polymer, and a polyisocyanate. These two components react together after application to a substrate to form a polyurethane coating. These compositions are often thus referred to as 'polyurethane coating compositions' although strictly the polyurethane is only formed when the coating crosslinks.

The two components of polyurethane coating compositions begin to react together as soon as they are mixed and for this reason these compositions are usually supplied in the form of two components which are mixed together shortly before use. Because of the reaction between the components, the viscosity of the mixture begins to rise slowly right from first mixing. The mixed compositions have a limited useful life, referred to as the 'pot-life' after which the viscosity rise makes them unusable. Eventually, the mixed compositions in bulk become solid, or semi-solid. Typical pot-lives for vehicle refinish polyurethane coating compositions range from 30 minutes to 5 hours, typically 30 minutes to 3 hours.

Several different types of polyisocyanate are known for use in these types of composition, including the isocyanurate trimers of hexamethylene diisocyanate, and isophorone diisocyanate and polyisocyanate prepolymers made by reaction of these diisocyanates and others such as toluene diisocyanates with polyols such as trimethylol propane.

One other type of polyisocyanate is diphenylmethane diisocyanate, a mixture of 2 isomers, 4,4- and 2,4-, also known as MDI. MDI is widely used in producing polyurethane foams. MDI is available in several forms, based on two types of product, purified monomeric MDI and polymeric MDI. MDI is relatively cheap amongst polyisocyanates and polymeric MDI is a low viscosity liquid at room temperature. In these respects MDI would be ideal for use in polyurethane coating compositions for vehicle refinish paints, particularly for primers. However, the isocyanate groups on MDI are very reactive and it has been found impossible to simply use MDI as a direct replacement for the other useful polyisocyanates in these types of composition because the resulting compositions have too short a pot-life. Thus, it has not been realistically possible to use MDI in practical refinish paints even though it has several attractive properties.

We have now discovered that it is possible to formulate practical polyurethane coating compositions which contain MDI by using a particular hydroxyl containing component having secondary hydroxyl groups, the secondary hydroxyl groups being the product of a reaction between a carboxylic group and an epoxide group. This type of hydroxyl containing component has itself been suggested for use in polyurethane vehicle refinish paints but only in conjunction with a reactive diluent having blocked primary amine groups or hindered secondary amine groups which are ketimines, aldimines or aspartic esters. These reactive diluents are expensive and this is a disincentive to the use of these compositions. Furthermore these previously proposed compositions often have to be formulated as three-pack compositions, the packs containing polymer, polyisocyanate and reactive diluent respectively, which makes them more complicated for the end-user to make up into the final paint. In contrast, the compositions of the present invention both avoid the use of expensive reactive diluents and utilise relatively low cost polyisocyanate to make two-pack polyurethane compositions. These coating compositions have a good pot-life and which also give films having good properties. The compositions are particularly useful as primers for vehicle refinish.

According to the present invention there is provided a coating composition comprising ;
i) diphenylmethane diisocyanate, and
ii) a hydroxyl functional compound which is a polyester having secondary hydroxyl groups, the secondary hydroxyl groups being the product of a reaction between a carboxylic acid group and an epoxide group,
the composition containing substantially no reactive diluent which are aldimines, ketimines or aspartic esters.

A further benefit of using diphenylmethane diisocyanate (MDI) is that the compositions do not require the presence of a reactive diluent to lower the viscosity of the composition, or to increase the speed of reaction of the components.

MDI is commercially available, for example as Suprasec MDI and MDI-based prepolymers from ICI Polyurethanes. MDI is preferably used in an amount such that the ratio of isocyanate groups on the MDI to the total number of hydroxyl groups on the hydroxyl functional compound is in the range 0.7:1 to 3:1, more preferably 1:1 to 3:1.

Preferably the hydroxyl functional compound has a molecular weight of less than 5000, more preferably less than 2500 and most preferably less than 2000.

Preferably the hydroxyl functional compound is the reaction product of a polyfunctional carboxylic acid and a monoepoxide, and so has secondary hydroxyl groups arising from the reaction of the acid groups on the polycarboxylic acid with the epoxy group on the monoepoxide.

Preferred monoepoxides are glycidyl esters of C2-C20 alkanoic acids, preferably C8-C9 tertiary carboxylic acids such as versatic acid. One particularly suitable monoepoxide is Cardura E10™.

The polyfunctional carboxylic acid can be a polyester with two or more carboxylic acid groups, preferably two to four carboxylic acid groups, more preferably two or three such groups. Polyesters are compounds containing more than one ester group. Acid functional polyesters can be made by conventional methods from a mixture of polyols, diacids and anhydrides. One preferred acid functional polyester can be made by reaction of a polyol with a carboxylic acid anhydride. Polyols are compounds with more than one hydroxyl group. Preferably the polyol has from two to six hydroxyl groups per molecule. Preferably the polyol has a molecular weight of 66 to 150. Examples of suitable polyols are ethylene glycol, propylene glycol, 1,4-butane diol, neopentyl glycol, hexane-1,6-diol, glycerol, trimethylol propane and pentaerythritol. Preferred anhydrides are cyclic internal anhydrides of dicarboxylic acids such as maleic anhydride, succinic anhydride, phthalic anhydride and hexahydroxyphthalic anhydride.

Preferably the reaction between the anhydride and the polyol is carried out substantially stoichiometrically so that one anhydride molecule reacts with each hydroxyl group on the polyol. The resulting polyfunctional acid compound has substantially the same number of acid groups as the polyol had hydroxyl groups. Because the hydroxyl/anhydride reaction occurs at a lower temperature than the carboxyl/hydroxyl or transesterification reactions, there are few side reactions and the molecular weight of the product can be controlled.

The reaction between the polyol and the anhydride can be carried out by dissolving the components in an organic solvent and then heating the solution preferably to between about 100 and 130°C for between about 1 and 3 hours so as to produce the polyfunctional carboxylic acid.

The reaction between the polyfunctional carboxylic acid and the monoepoxide can be carried out by adding the monoepoxide to a solution of the polycarboxylic acid in a suitable organic solvent in an amount so as to react each of the hydroxyl groups on the polyol with an epoxide group, and heating the mixture to between about 130 and 160°C for between about 2 and 12 hours.

The compositions can optionally contain a volatile organic solvent. The volatile organic solvent can be any solvent which will dissolve the polyisocyanate, and the hydroxyl functional compound. It can be an aliphatic or aromatic hydrocarbon such as Solvesso 100™, toluene or xylene, an alcohol such as butanol or isopropanol, an ester such as butyl acetate or ethyl acetate, a ketone such as acetone, methyl isobutyl ketone or methyl ethyl ketone, an ether, an ether-alcohol or an ether-ester or a mixture of any of these.

Preferably the compositions contain less than 500 g/l of volatile organic solvent based on the total composition, more preferably less than 480 g/l still more preferably less than 420g/l and most preferably less than 250g/l.
The compositions can also contain catalysts for the isocyanate-hydroxyl reaction. Suitable catalysts include tin catalysts such as dibutyl tin dilaurate and amine catalysts such as triethylamine. The compositions can also contain other conventional paint additives such as, pigments, fillers, UV absorbers and flow aids. Preferably the composition is pigmented, that is, it also contains pigments and optionally fillers. Most preferably, the composition is pigmented so as to be useful as a vehicle refinish primer.

The compositions can be made by mixing the components, optionally dissolved in organic solvent, in any order.

The coating composition of the invention can be applied to the surface of a substrate and then allowed or caused to dry and cure. According to the present invention there is provided a process for coating a substrate which comprises the steps of applying a layer of a coating composition according to the present invention to a surface of the substrate and thereafter causing or allowing the layer to cure.

The coating composition can be applied by conventional means such as by brush, roller or spray, preferably spray. The substrate can be for example, metal, plastic, wood or glass. The compositions are particularly useful for refinishing motor vehicles, and especially as primers.

The applied layer can be allowed to cure at ambient temperature in the case where the hydroxyl polymer and crosslinker react together at ambient temperatures. Alternatively the layer can be baked at elevated temperatures, for example 50-120°C to accelerate curing. Drying and curing typically takes between 5 minutes and 24 hours depending on the ambient conditions and on the particular components used. Conveniently it takes about 15 minutes to about 5 hours.

According to the present invention there is also provided a coated article obtainable by the process.

The invention will now be illustrated by means of the following examples. The MDI used in the samples was Suprasec DNR from ICI Polyurethanes.

### EXAMPLES

### Polyester 1

A mixture of neopentyl glycol (5.1 parts), 1,4-butanediol (4.5 parts) and hexahydroxy phthalic anhydride (30.4 parts) were heated under nitrogen to about 95°C so as to melt the components. The molten mixture was stirred and the temperature was slowly raised until an exotherm occurred at about 130°C. At this point, heating was stopped and the temperature went up to 170°C, then down to 150°C whereupon heating was resumed and the mixture was held at 150°C for 1 hour. The mixture was then allowed to cool for 1 hour. The mixture was heated back up to 150°C, Cardura E10™ (glycidyl ester of a C8-9 carboxylic acid from Shell, 50.0 parts) was added dropwise over a period of 3.5 hours and the mixture was allowed to cool to room temperature and left overnight. The mixture was heated to 150°C for a further 7 hours before being allowed to cool to room temperature. Butyl acetate (10 parts) was added to give a theoretical non-volatile solids content of 90%. The final measured acid value was 0.5 mgKOH/g based on non-volatile content. The number average molecular weight as measured by G.P.C. was 914.

### Primer composition

The following were added slowly in the order given to a mixture of Polyester 1 from above (27.8 parts), methyl isoamyl ketone (MIAK, 18.5 parts) and Byk 220S dispersant (2.78 parts), bentone (0.91 parts), talc (43 parts), extender (34.4 parts), titanium dioxide (43.3 parts), zinc phosphate pigment ZPA (18.2 parts), black tinter (2.3 parts) and defoamer (2.8 parts). The mixture was dispersed for a further 20 minutes. Further MIAK (6.0 parts) was added to form a pigmented primer base.

Polyester 1 (41.4 parts) and MDI (33.9 parts) were added to the primer composition and the mixture was thinned to 25 seconds BSB4 with MIAK.

The viscosity of the bulk composition was measured using a BSB4 cup 0.5 hours after making it as a guide to its pot-life to be 29 seconds.

### Polyester 2

A mixture of neopentyl glycol (5.6 parts), trimethylol propane (4.8 parts) and hexahydroxy phthalic anhydride (33.2 parts) were heated under nitrogen to about 95°C so as to melt the components. The molten mixture was stirred and the temperature was slowly raised until an exotherm occurred at about 130°C. At this point, heating was stopped and the temperature went up to 165°C, then down to 150°C whereupon heating was resumed and the mixture was held at 150°C for 1 hour. Cardura E10™ (glycidyl ester of a C8-9 carboxylic acid from Shell, 48.6 parts) was added dropwise over a period of 3.5 hours and the mixture was allowed to cool to room temperature and left overnight The mixture was heated to 150°C for a further 7 hours before being allowed to cool to room temperature. Butyl acetate (7.7 parts) was added. The final measured acid value was 16.8 mgKOH/g based on non-volatile content. The number average molecular weight as measured by G.P.C. was 870.

### Polyester 3

### Stage 1

Adipic acid (49.7 parts), trimethylol propane (13.0 parts) and neopentyl glycol (30.4 parts) were heated with stirring under a nitrogen atmosphere until the mixture began to exotherm (at about 95°C) when hearing was stopped. The temperature of the mixture rose to about 135°C due to the exotherm. When the exotherm was over and the temperature began to fall, heating was resumed and the temperature was raised to 205°C. As the temperature was raised, water was removed via a fractionating column. When the mixture was at 205°C and the evolution of water had slowed, the mixture was allowed to cool.

### Stage 2

The fractionating column was replaced with a Dean & Stark column filled with methyl isobutyl ketone. Methyl isobutyl ketone (1.4 parts) was added to the mixture and the temperature was raised to reflux to remove further water. When the acid value of the mixture reached 15 mgKOH/g non-vol. the heat was removed. The temperature was allowed to fall to 100 °C and then butyl acetate (5.5 parts) was added. The number average molecular weight as measured by G.P.C. was 1900.

### Primer composition 2

The following were added slowly in the order given to a mixture of Polyester 2 from above (13.27 parts), methyl isoamyl ketone (MIAK, 9.27 parts) and Byk 220S dispersant (1.40 parts). Bentone (0.45 parts), silica extender (0.74 parts), calcium magnesium carbonate (18.75 parts), magnesium silicate (11.48 parts), zinc phosphate pigment ZPA (12.00 parts), titanium dioxide (27.51 parts) black tinter (1.24 parts) and defoamer (1.41 parts). The mixture was dispersed for a further 20 minutes. Further MIAK (1.79 parts) and Polyester 2 (23.196 parts) were added to form a pigmented primer base.

MDI (Suprasec DNR available from ICI Polyurethanes, 10.26 parts) was added to the primer composition and the mixture was thinned to 25 seconds BSB4 with butyl acetate.

The viscosity of the bulk composition was measured using a BSB4 cup 1 hour after making it as a guide to its pot-life.

### Primer composition 3

The following were added slowly in the order given to a mixture of Polyester 3 from above (13.27 parts), methyl isoamyl ketone (MIAK, 9.27 parts) and Byk 220S dispersant (1.40 parts). Bentone (0.45 parts), silica extender (0.74 parts), calcium magnesium carbonate (18.75 parts), magnesium silicate (11.48 parts), zinc phosphate pigment ZPA (12.00 parts), titanium dioxide (27.51 parts) black tinter (1.24 parts) and defoamer (1.41 parts). The mixture was dispersed for a further 20 minutes. Further MIAK (1.79 parts) and Polyester 3 (23.196 parts) were added to form a pigmented primer base.

MDI (Suprasec DNR available from ICI Polyurethanes, 10.26 parts) was added to the primer composition and the mixture was thinned to 25 seconds BSB4 with butyl acetate.

The viscosity of the bulk composition was measured using a BSB4 cup 1 hour after making it as a guide to its pot-life.
Primer compositions 2 and 3 were tested by spray applying the primer to cold rolled steel test panels, testing the primers for dust free time, print free time and hardness, and topcoating with a colourcoat and then evaluating the test panels for cross hatch adhesion and appearance. Four test panels were sanded with P180 sandpaper and solvent wiped with white spirit. The panels were the coated with 20-25 microns of chromate free etch primer P565-713 (available from ICI Autocolor, used as instructed on the product data sheet). Primer 2 and primer 3 were each spray applied on to two of the panels to give a film build of 100-120 microns. One panel coated with each primer was used for the evaluations shown in the table below.

| | Initial viscosity (/secs BSB4 cup) | Viscosity after 1 hour (/secs BSB4 cup) | Solids at 25 seconds BSB4 cup viscosity | Dust free time (/minutes) | Print free time (/minutes) | Konig hardness | |
|---|---|---|---|---|---|---|---|
| | | | | | | 1 hour | 1 day |
| Primer 2 | 25 | 38 | 65.3% | 40 | 90 | 32 | 64 |
| Primer 3 | 26 | 66 | 58.3% | 35 | 90 | 13 | 19 |

The dust free time (DFT) of each system was determined by dropping dust on to the panel at five-minute intervals. The DFT was the time after application when the dust could be removed using a small brush without marking the coating. The print free time (PFT) was determined by placing a 1" disc of Whatmann No. 1 filter paper on the drying panel under a 1" rubber bung and a 50 g weight. The filter paper is held in place for exactly sixty seconds and the weight and bung are then removed. The panel is then lifted and inverted. The PFT was the first time when the filter paper falls off without leaving a mark on the coating.
The results show that primer 2 has a longer pot-life and better hardness development than primer 3.

The remaining panels were left at room temperature for four hours and then sanded with P360 sandpaper. The panel coated with primer 2 flatted easily. The panel coated with primer 3 was soft and difficult to flat., 100 parts by weight of Aquabase medium coarse aluminium basic P968-9987 was mixed with 10.3 parts by weight of Aquabase activator P935-2018 and 3 parts by weight of Aquabase thinner P275-366 (all available from ICI Autocolor). This was applied to both panels to give a film build of 12-15 microns. Both panels were then coated with P190-670 clearcoat (available from ICI Autocolor, used as instructed on the product data sheet). Both panels had excellent appearance and there was no discernible deterioration in appearance over one month. Crosshatch adhesion was measured according to ASTM D3359 one day and one month after application. Both panels gave 100% adhesion.

## Claims

1. A coating composition comprising;
i) diphenylmethane diisocyanate, and
ii) a hydroxyl functional compound which is a polyester having secondary hydroxyl groups, the secondary hydroxyl groups being the product of a reaction between a carboxylic acid group and an epoxide group, the composition containing substantially no reactive diluent which are aldimines, ketimines or aspartic esters.

2. A composition as claimed in Claim 1 in which the ratio of the isocyanate groups on the diphenylmethane diisocyanate to the total number of hydroxyl groups on the hydroxyl functional compound is 0.7:1 to 3.1.

3. A composition as claimed in claim 1 or claim 2 in which the hydroxyl functional compound has a molecular weight of less than 5000.

4. A composition as claimed in any one of claims 1 to 3 in which the hydroxyl functional compound is the reaction product of a polyfunctional carboxylic acid and a monoepoxide.

5. A composition as claimed in claim 4 in which the monoepoxide is a glycidyl ester of a C8-C9 tertiary carboxylic acid.

6. A composition as claimed in claim 4 or claim 5 in which the polyfunctional carboxylic acid is a polyester with two or more carboxylic acid groups.

7. A composition as claimed in any one of claims 4 to 6 in which the polyfunctional carboxylic acid is the reaction product of a polyol and an anhydride.

8. A composition as claimed in Claim 7 in which the polyol has from 2 to 4 hydroxyl groups.

9. A composition as claimed in any one of claims 1 to 8 which is pigmented.

10. A process for preparing a composition as claimed in Claim I which comprises mixing
i) diphenylmethane diisocyanate, and
ii) a hydroxyl functional compound which is a polyester having secondary hydroxyl groups, the secondary hydroxyl groups being the product of a reaction between a carboxylic acid group and an epoxide group, optionally dissolved in organic solvent.

11. A process for coating a substrate which comprises the steps of applying a layer of a coating composition as claimed in any one of claims 1 to 9, to a surface of the substrate and thereafter causing or allowing the layer to cure.

12. A coated substrate obtainable by the process of Claim 11.

## Patentansprüche

1. Beschichtungszusammensetzung, die Folgendes umfasst:
i) Diphenylmethandiisocyanat und
ii) eine Hydroxyl-funktionelle Verbindung, bei der es sich im einen Polyester mit sekundären Hydroxylgruppen handelt, wobei die sekundären Hydroxylgruppen das Produkt von einer Reaktion zwischen einer Carbonsäuregruppe und einer Epoxidgruppe sind, wobei die Zusammensetzung im Wesentlichen kein reaktives Verdünnungsmittel enthält, bei dem es sich um Aldimine, Ketimine oder Asparaginsäureester handelt.

2. Zusammensetzung nach Anspruch 1, worin das Verhältnis der Isocyanatgruppen an dem Diphenylmethandiisocyanat zu der Gesamtzahl der Hydroxylgruppen an der Hydroxyl-funktionellen Verbindung 0,7:1 bis 3:1 beträgt.

3. Zusammensetzung nach Anspruch 1 oder 2, worin die Hydroxyl-funktionelle Verbindung ein Molekulargewicht von weniger als 5000 aufweist.

4. Zusammensetzung nach einem der Ansprüche 1 bis 3, worin die Hydroxyl-funktionelle Verbindung das Reaktionsprodukt einer polyfunktionellen Carbonsäure und einem Monoepoxid ist.

5. Zusammensetzung nach Anspruch 4, worin das Monoepoxid ein Glycidylester von einer tertiären C8-C9-Carbonsäure ist.

6. Zusammensetzung nach Anspruch 4 oder Anspruch 5, worin die polyfunktionelle Carbonsäure ein Polyester mit zwei oder mehr Carbonsäuregruppen ist.

7. Zusammensetzung nach einem der Ansprüche 4 bis 6, worin die polyfunktionelle Carbonsäure das Reaktionsprodukt von einem Polyol und einem Anhydrid ist.

8. Zusammensetzung nach Anspruch 7, worin das Polyol von 2 bis 4 Hydroxylgruppen aufweist.

9. Zusammensetzung nach einem der Ansprüche 1 bis 8, die pigmentiert ist.

10. Verfahren zum Herstellen einer Zusammensetzung nach Anspruch 1, welches das Mischen von Folgendem umfasst:
i) Diphenylmethandiisocyanat und
ii) einer Hydroxyl-funktionellen Verbindung, bei der es sich um einen Polyester mit sekundären Hydroxylgruppen handelt, wobei die sekundären Hydroxylgruppen das Produkt einer Reaktion zwischen einer Carbonsäuregruppe und einer Epoxidgruppe sind, die optional in organischem Lösungsmittel aufgelöst ist.

11. Verfahren zum Beschichten eines Substrats, das die folgenden Schritte umfasst: Auftragen einer Schicht einer Beschichtungszusammensetzung nach einem der Ansprüche 1 bis 9 auf eine Oberfläche des Substrats und im Anschluss daran, die Schicht veranlassen zu härten oder der Schicht erlauben zu härten.

12. Beschichtetes Substrat, das durch das Verfahren nach Anspruch 11 erhaltbar ist.

## Revendications

1. Composition de revêtement comprenant :
i) du diphénylméthane diisocyanate, et
ii) un composé à fonction hydroxyle qui est un polyester ayant des groupements hydroxyle secondaires, les groupements hydroxyle secondaires étant le produit d'une réaction entre un groupement acide carboxylique et un groupement époxyde, la composition contenant sensiblement aucun diluant réactif que sont les aldimines, les cétimines ou les esters aspartiques.

2. Composition selon la revendication 1, dans laquelle le rapport des groupements isocyanate du diphénylméthane diisocyanate au nombre total de groupements hydroxyle du composé à fonction hydroxyle va de 0,7:1 à 3:1.

3. Composition selon la revendication 1 ou la revendication 2, dans laquelle le composé à fonction hydroxyle a un poids moléculaire inférieur à 5 000.

4. Composition selon l'une quelconque des revendications 1 à 3, dans laquelle le composé à fonction hydroxyle est le produit de réaction d'un acide carboxylique polyfonctionnel et d'un monoépoxyde.

5. Composition selon la revendication 4, dans laquelle le monoépoxyde est un ester glycidylique d'un acide carboxylique tertiaire en C8-C9.

6. Composition selon la revendication 4 ou la revendication 5, dans laquelle l'acide carboxylique polyfonctionnel est un polyester ayant deux ou plusieurs groupements acide carboxylique.

7. Composition selon l'une quelconque des revendications 4 à 6, dans laquelle l'acide carboxylique polyfonctionnel est le produit de réaction d'un polyol et d'un anhydride.

8. Composition selon la revendication 7, dans laquelle le polyol a de 2 à 4 groupements hydroxyle.

9. Composition selon l'une quelconque des revendications 1 à 8, qui est pigmentée.

10. Procédé de préparation d'une composition selon la revendication 1, comprenant le mélange
i) de diphénylméthane diisocyanate, et
ii) d'un composé à fonction hydroxyle qui est un polyester ayant des groupements hydroxyle secondaires, les groupements hydroxyle secondaires étant le produit d'une réaction entre un groupement acide carboxylique et un groupement époxyde, éventuellement solubilisé dans un solvant organique.

11. Procédé de revêtement d'un substrat, comprenant les étapes d'application d'une couche d'une composition de revêtement selon l'une quelconque des revendications 1 à 9, à une surface du substrat et de permettre ou de provoquer ensuite le durcissement de la couche.

12. Substrat revêtu pouvant être obtenu par le procédé selon la revendication 11.
